# EUROPEAN PATENT SPECIFICATION

(11) **EP 3 792 690 B1**
(45) Date of publication and mention of the grant of the patent: **30.10.2024**
(21) Application number: 19800781.7
(22) Date of filing: 05.01.2019
(51) Int. Cl.: G03B 21/20, G03B 21/00, G03B 33/08

(54) **LIGHT SOURCE SYSTEM, PROJECTION DEVICE AND ILLUMINATION DEVICE**
LICHTQUELLENSYSTEM, PROJEKTIONSVORRICHTUNG UND BELEUCHTUNGSVORRICHTUNG
SYSTÈME DE SOURCE DE LUMIÈRE, DISPOSITIF DE PROJECTION ET DISPOSITIF D'ÉCLAIRAGE

(30) Priority: 10.05.2018 CN 201810444994
(43) Date of publication of application: 17.03.2021
(73) Proprietor: Appotronics Corporation Limited, Shenzhen, Guangdong 518000 (CN)
(72) Inventor: GUO, Zuqiang, Shenzhen, Guangdong 518000 (CN); DU, Peng, Shenzhen, Guangdong 518000 (CN); LU, Ning, Shenzhen, Guangdong 518000 (CN)
(74) Representative: Zaboliene, Reda
(86) International application number: PCT/CN2019/070523
(87) International publication number: WO 2019/214273

(56) References cited:
- EP-A1- 2 793 079
- EP-A1- 2 898 368
- EP-A1- 2 939 070
- CN-A- 104 749 867
- CN-A- 107 621 744
- CN-U- 205 982 969
- JP-A- 2015 161 801
- US-B2- 9 599 316

## Description

### TECHNICAL FIELD

The present disclosure relates to the field of projection technology, in particular to a light source system, a projection device and an illumination device.

### BACKGROUND

This section is intended to provide background or context for the specific embodiments of the present disclosure stated in the claims. The description here is not admitted as the prior art just because it is included in this section.

Laser phosphor light source technology is a technology that uses a first color laser light to excite phosphor powder to generate excited light. Usually blue laser light is used as the first color laser light. The phosphor powder may be yellow phosphor, green phosphor, or red phosphor, and so on. The blue laser light is relatively low in cost and high in electro-optical conversion efficiency, and achieves high excitation efficiency of the phosphor powder. However, fluorescent light has a wide spectrum and low color purity, and thus cannot directly meet the requirements of a wide color gamut. To improve the color purity, a filter is usually used to filter the light, but this method will cause a great light loss.

On this basis, a hybrid light source using fluorescent light and laser light can not only achieve better color purity, but also can maintain an acceptable cost by using decoherence of the mixed light thereof. At the same time, it brings some problems to the optical design. As the fluorescence spectrum and the laser light spectrum have overlapping wavelength bands, combining the fluorescence spectrum with the laser light spectrum will cause a large loss of light efficiency.

EP2898368A1 relates to an illumination device. The illumination device (4) includes an excitation light source(10) which emits excitation light, a wavelength converter(14) which generates fluorescent light having a wavelength different from that of the excitation light through the excitation of the excitation light and a light path-splitting member(15) including a first filter and a second filter arranged to alternately come across a light path of the excitation light, wherein the first filter reflects one of the excitation light and the fluorescent light and transmits the other of the excitation light and the fluorescent light, the second filter transmits light reflected by the first filter and reflects light transmitted through the first filter, and the wavelength converter(14) is disposed in a reflection light path or a transmission light path of the excitation light.

EP2793079A1 relates to a light source system and a projection device. The light source system includes an excitation light source (301) for generating a excitation light (2011), a wavelength conversion device (306), a supplemental light source for generating a supplemental light, a light guiding device for directing the supplemental light to the wavelength conversion device, a light collection device for collecting the supplemental light that scattered and reflected by the wavelength conversion device.

EP2939070A1 relates to a light source device and a projector. The light source device includes a light source section (1) which generates any one of blue light, red light, and green light; a phosphor (5) which generates a fluorescence including the two colors other than the color of the light emitted from the light source section (1); a color-changing section (10) which changes one of the two colors of the fluorescence emitted from the phosphor (5) to another color regularly and irradiates it to the image-forming element (13); and a light path-switching section (3) which switches a light path in which a fluorescence excited by the color light emitted from the light source section (1) passes towards the color-changing section (10) and a light path in which the color light emitted from the light source section (1) passes towards the image-forming element (13) regularly.

US9599316B2 relates to a light source device. The light source device has a first monochromatic light source group, a second monochromatic light source group, a polarization selection and wavelength selection element, a first phosphor layer, and a second phosphor layer. The first monochromatic light source group outputs first polarized light having a fixed polarization direction. The second monochromatic light source group outputs second polarized light having a fixed polarization direction. The first phosphor layer emits light in a first wavelength band. The second phosphor layer emits light in a second wavelength band. The polarization and wavelength selection element directs the first polarized light onto the first phosphor layer by transmitting the first polarized light and directs the second polarized light onto the second phosphor layer by reflecting the second polarized light, reflects the light in the first wavelength band and transmits the light in the second wavelength band.

### SUMMARY

To solve the technical problem of a large loss of light efficiency of a laser phosphor light source in the prior art, the present disclosure provides a laser phosphor light source system capable of effectively reducing the light efficiency loss, and the present disclosure further provides a projection device and an illumination device.

A light source system includes:
an excitation light source configured to emit first color laser light;
a supplemental light source configured to emit supplemental light of a different color from that of the first color laser light, the supplemental light being laser light;
an optical path selecting element, including:
   a transmitting portion configured to transmit the first color laser light;
   an optical path selecting portion configured to reflect the first color laser light in time sequence to a first optical path or a second optical path; and
   a driving portion configured to drive the transmitting portion and the optical path selecting portion to be alternately located on an optical path of the first color laser light;
a first wavelength conversion device configured to generate a second color fluorescent light under excitation of the first color laser light transmitted along the first optical path; and
a second wavelength conversion device configured to generate a third color fluorescent light under excitation of the first color laser light transmitted along the second optical path, and a control device:
wherein when the transmitting portion is located on the optical path of the first color laser light, the control device controls the supplemental light source not to emit light; and
when the optical path selecting portion is located on the optical path of the first color laser light, the control device controls the supplemental light source to emit light,
wherein the second color fluorescent light, the third color fluorescent light, the supplemental light, and the first color laser light transmitted by the optical path selecting element are combined and then exit.

Further, the optical path selecting portion includes an undulating surface composed of surfaces of a first reflective portion and a second reflective portion, the first reflective portion is configured to guide the first color laser light to the first optical path, and the second reflective portion is configured to guide the first color laser light to the second optical path.

Further, the undulating surface is provided with a first segment and a second segment, wherein the first reflective portion is arranged in the first segment, and the second reflective portion is arranged in the second segment.

Further, the first reflective portion and the second reflective portion are arranged to be staggered or adjacent to each other.

Further, the first reflective portion and the second reflective portion are planes or curved surfaces with different reflection paths.

Further, the light source system is provided with corresponding collection lens groups at positions adjacent to the first wavelength conversion device and the second wavelength conversion device respectively, each collection lens group is configured to converge light to the corresponding wavelength conversion device, and collimate the fluorescent light exiting from the corresponding wavelength conversion device and then allow the fluorescent light collimated to exit.

Further, the light source system further includes a light homogenizing device, and the second color fluorescent light, the third color fluorescent light, the supplemental light, and the first color laser light transmitted by the optical path selecting element are combined and then enter the light homogenizing device.

Further, the light source system further includes a first split filter configured to guide the second color fluorescent light exiting from the first wavelength conversion device and the third color fluorescent light exiting from the second wavelength conversion device to exit along a same optical path; and
the first split filter is provided with a first region and a second region, wherein the first region is configured to guide the first color laser light transmitted along the first optical path to the first wavelength conversion device, and the second region is configured to guide the first color laser light transmitted along the second optical path to the second wavelength conversion device.

Further, the light source system further includes a second split filter configured to guide the supplemental light, the second color fluorescent light and the third color fluorescent light exiting from the first split filter, and the first color laser light transmitted by the optical path selecting element to exit along a same optical path.

Further, the second color fluorescent light and the third color fluorescent light are irradiated to a surface of the second split filter after collimation, the second split filter includes a coated region and an edge region; the supplemental light and the first color laser light exiting from the optical path selecting element converge near the coated region; and the coated region is configured to reflect the supplemental light and the first color laser light transmitted by the optical path selecting element, and the edge region is configured to transmit the second color fluorescent light and the third color fluorescent light.

Further, the coated region is configured to reflect light within a preset wavelength range, and a wavelength range of the first color laser light and a wavelength range of the supplemental light are within the preset wavelength range.

Further, the first color laser light and the supplemental light are light in a first polarization state, and the coated region is configured to reflect the light in the first polarization state and transmit light in other polarization states.

Further, the light source system further includes a third split filter, and the supplemental light emitted by the supplemental light source and the first color laser light emitted by the excitation light source are combined by the third split filter and then enter the optical path selecting element, and the optical path selecting portion of the optical path selecting element is further configured to transmit the supplemental light.

Further, the transmitting portion is a scattering sheet.

Further, the optical path selecting portion is a dichroic sheet with a curved surface.

Further, the light source system further includes a third split filter, and the first color laser light transmitted by the optical path selecting element and the supplemental light emitted by the supplemental light source are combined by the third split filter and then enter the second split filter.

Further, a scattering element is further arranged between the second split filter and the third split filter.

A projection device includes any light source system described above.

An illumination device includes any light source system described above.

The first color laser light and the supplemental light exiting from the light source system provided by the present disclosure are not reflected or transmitted by the wavelength conversion devices, and the utilization rate of laser light is high, which is beneficial to reducing the light efficiency loss of the light source system and increasing the luminous intensity, thereby ensuring the quality of output light of the projection device and the illumination device, and having a very important practical value.

### Brief Description of Drawings

To more clearly describe technical solutions in embodiments/implementations of the present disclosure, drawings for use in description of the embodiments/implementations will be introduced briefly below. Obviously, the drawings in the following description illustrate some embodiments/implementations of the present disclosure, and for those of ordinary skill in the art, other drawings may also be obtained based on these drawings without creative work.
FIG 1 is a structural diagram of a light source system provided by a first embodiment of the present disclosure.
FIG 2 is a top-view structural diagram of an optical path selecting element shown in FIG 1.
FIG 3 is a top-view structural diagram of a first light splitting filter shown in FIG 1.
FIG 4 is a top-view structural diagram of a second light splitting filter shown in FIG 1.
FIG 5 is a structural diagram of the light source system according to a second embodiment of the present disclosure.
FIG 6 is a top-view structural diagram of an optical path selecting element shown in FIG 5.

### DESCRIPTION OF SYMBOLS OF MAIN COMPONENTS

| | |
|---|---|
| Light source system | 100, 200 |
| Excitation light source | 110 |
| Supplemental light source | 120, 220 |
| Third light splitting filter | 125, 225 |
| Optical path selecting element | 130, 230 |
| Transmitting portion | 132, 232 |
| Optical path selecting portion | 134, 234 |
| First segment | 135a |
| Second segment | 135b |
| Driving portion | 136 |
| First light splitting filter | 140 |
| First region | 142 |
| Second region | 144 |
| First wavelength conversion device | 150a |
| Second wavelength conversion device | 150b |
| Scattering element | 260 |
| Second light splitting filter | 170, 270 |
| Coated region | 172 |
| Edge region | 174 |
| Light homogenizing device | 180 |

The following specific embodiments will be used in conjunction with the above-mentioned drawings to further describe the present disclosure.

### DETAIL DESCRIPTION

To understand the above objectives, features and advantages of the present disclosure more clearly, the present disclosure will be described in detail below in conjunction with the accompanying drawings and specific embodiments. It is to be noted that embodiments in the present application and features in the embodiments may be combined with each other without conflicts.

Many specific details are set forth in the following description to fully understand the present disclosure, and the described embodiments are only a part of the embodiments of the present disclosure, and not all the embodiments. All other embodiments obtained by those of ordinary skill in the art without creative work, based on the embodiments in the present disclosure, shall all fall into the protection scope of the present disclosure.

Unless otherwise defined, all technical and scientific terms used herein have the same meaning as commonly understood by those skilled in the technical field of the present disclosure. The terms used in the specification of the present disclosure are only for the purpose of describing the specific embodiments and are not intended to limit the present disclosure.

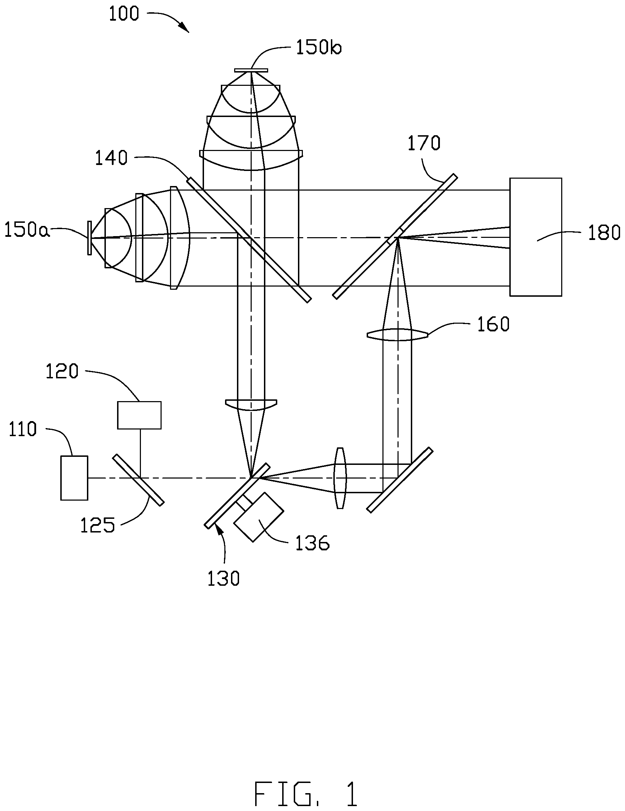

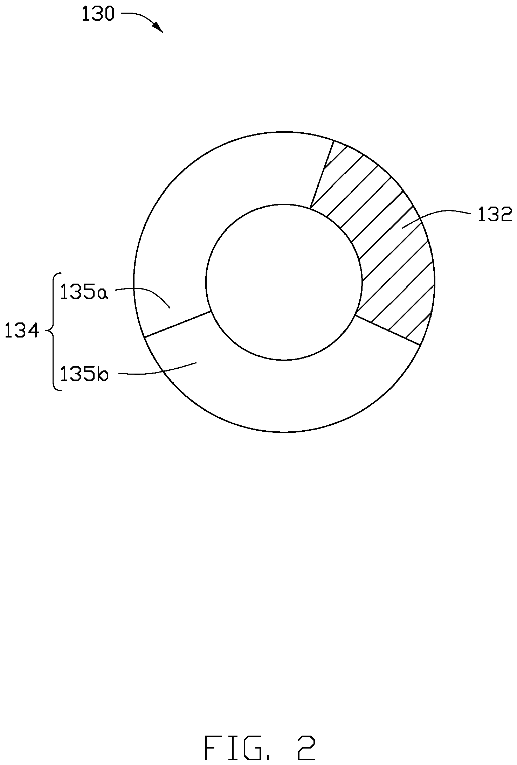

See FIG 1 and FIG. 2. FIG. 1 is a structural diagram of a light source system 100 according to a first embodiment of the present disclosure, and FIG 2 is a top-view structural diagram of an optical path selecting element 130 shown in FIG 1. The light source system 100 has a high laser light utilization rate, which is beneficial to reducing the light efficiency loss of the light source system 100 and increasing the luminous intensity, and the light source system 100 can be applied to a projection device and an illumination device, and ensures the quality of output light of the projection device and the illumination device, and has a very important practical value.

The light source system 100 includes: an excitation light source 110, a supplemental light source 120, an optical path selecting element 130, a first wavelength conversion device 150a, and a second wavelength conversion device 150b. Wherein, the excitation light source 110 is configured to emit a first color laser light; the supplemental light source 120 is configured to emit supplemental light of a different color from the first color laser light, the supplemental light is a laser light; and the optical path selecting element 130 includes a transmitting portion 132, an optical path selecting portion 134, and a driving portion 136. The transmitting portion 132 is configured to transmit the first color laser light; the optical path selecting portion 134 is configured to reflect the first color laser light in time sequence to a first optical path or a second optical path; and the driving portion 136 is configured to drive the transmitting portion 132 and the optical path selecting portion 134 to be alternately located on an optical path of the first color laser light. The first wavelength conversion device 150a is configured to generate a second color fluorescent light under excitation of the first color laser light transmitted along the first optical path; and the second wavelength conversion device 150b is configured to generate a third color fluorescent light under excitation of the first color laser light transmitted along the second optical path. The second color fluorescent light, the third color fluorescent light, the supplemental light, and the first color laser light transmitted by the optical path selecting element are combined and then exit.

The first color laser light and the supplemental light exiting from the light source system 100 are not reflected and transmitted by the wavelength conversion devices, so the laser light utilization rate is high, which is beneficial to reducing the light efficiency loss of the light source system 100 and increasing the luminous intensity, thereby ensuring the quality of output light of the projection device and the illumination device, and having a very important practical value.

It should be understood that, the light source system 100 further includes a light homogenizing device 180, and the second color fluorescent light, the third color fluorescent light, the supplemental light, and the first color laser light transmitted by the optical path selecting element 130 are combined and then enter the light homogenizing device 180, and the light is homogenized by the light homogenizing device 180 and then exits. It should be understood that the light homogenizing device 180 may be a light homogenizing rod or a fly-eye lens. In an embodiment, the light homogenizing device 180 includes a scattering film for scattering light, so as to perform decoherence processing on the exiting light to reduce coherent speckles.

As shown in FIG 1, the excitation light source 110 and the supplemental light source 120 emit laser light of different colors. The excitation light source 110 includes a light emitting body configured to emit the first color laser light. In an embodiment, the excitation light source 110 further includes a light homogenizing device configured to homogenize the first color laser light.

Further, the excitation light source 110 may be a blue light source, which emits blue laser light. It should be understood that the excitation light source 110 is not limited to a blue light source, and the excitation light source 110 may also be a purple light source, a red light source, a green light source, or the like. In this embodiment, the light emitting body in the excitation light source 110 is a blue laser configured to emit blue laser light as the first color laser light. It should be understood that the light emitting body in the excitation light source 110 may include one or two lasers or laser arrays, and the specific number of the lasers may be selected according to actual needs.

The light homogenizing device is configured to homogenize the first color laser light and then allow the homogenized light to exit. In this embodiment, the light homogenizing device may be a light homogenizing rod or a fly-eye lens. In an embodiment, the light homogenizing device in the excitation light source 110 includes a scattering film configured to scatter the first color laser light, so as to perform decoherence processing on the first color laser light.

In this embodiment, the supplemental light source 120 includes a light emitting body configured to emit red laser light. The light emitting body in the supplemental light source 120 is a red laser, and the supplemental light source 120 is configured to emit red laser light as the supplemental light. In this embodiment, it should be understood that the light emitting body in the supplemental light source 120 may include one or two lasers or laser arrays, and the specific number of the lasers may be selected according to actual needs. It should be understood that, in an embodiment, the supplemental light source 120 is configured to emit green laser light as the supplemental light, and accordingly, the light emitting body in the supplemental light source 120 includes a green laser. It should be understood that the supplemental light source 120 may also include a light emitting body configured to emit laser light of two colors. For example, the light emitting body in the supplemental light source 120 includes a red laser and a green laser, which emit red laser light and green laser light as the supplemental light.

As shown in FIG 1, the first wavelength conversion device 150a and the second wavelength conversion device 150b are fixed wavelength conversion devices, preferably fixed fluorescent plates, which is beneficial to reducing the space occupied by the wavelength conversion devices in the light source system 100, and is favorable for a miniaturization design of the light source system 100. The first wavelength conversion device 150a and the second wavelength conversion device 150b are configured to generate fluorescent light of corresponding colors under the excitation of the first color laser light. In this embodiment, a surface of the first wavelength conversion device 150a is provided with red phosphor powder to generate red fluorescent light, and a surface of the second wavelength conversion device 150b is provided with green phosphor powder to generate green fluorescent light. It should be understood that the first wavelength conversion device 150a and the second wavelength conversion device 150b may also be provided with wavelength conversion materials of other colors.

The light source system 100 is provided with corresponding collection lens groups at positions adjacent to the first wavelength conversion device 150a and the second wavelength conversion device 150b respectively, each collection lens group is configured to converge light to the corresponding wavelength conversion device, and collimate the fluorescent light exiting from the corresponding wavelength conversion device and then allow the fluorescent light collimated to exit.

The light source system 100 further includes a control device (not shown in the figure). When the transmitting portion 132 is located on the optical path of the first color laser light, the control device controls the supplemental light source 120 not to emit light; and when the optical path selecting portion 134 is located on the optical path of the first color laser light, the control device controls, according to the color of the generated fluorescent light, the supplemental light source 120 to emit supplemental light of the corresponding color. In this embodiment, when the first wavelength conversion device 150a generates red fluorescent light, the control device controls the supplemental light source 120 to generate red supplemental light. When the second wavelength conversion device 150b generates green fluorescent light, the control device controls the supplemental light source 120 to generate green supplemental light. It should be understood that in embodiments in which the supplemental light source 120 can emit red supplemental light and green supplemental light, the control device controls the supplemental light source 120 to emit supplemental light corresponding to the current fluorescent color, that is, the control device controls the supplemental light source 120 to generate red supplemental light when red fluorescent light is generated, and the control device controls the supplemental light source 120 to generate green supplemental light when green fluorescent light is generated.

The light source system 100 further includes a third split filter 125, and the supplemental light emitted by the supplemental light source 120 and the first color laser light emitted by the excitation light source 110 are combined by the third split filter 125 and then enter the optical path selecting element 130. In this embodiment, the third light splitting filter 125 is a dichroic sheet for transmitting blue light and reflecting red light. Correspondingly, the transmitting portion 132 is a scattering sheet to reduce a speckle phenomenon of the first color laser light and expand its etendue. It should be understood that, in an embodiment, the transmitting portion 132 is provided with an anti-reflection film, and a scattering element is further provided between the optical path selecting element 130 and the light homogenizing device 180.

As shown in FIG 2, the optical path selecting portion 134 in the optical path selecting element 130 includes an undulating surface composed of surfaces of a first reflective portion and a second reflective portion, the first reflective portion is configured to guide the first color laser light to the first optical path, and the second reflective portion is configured to guide the first color laser light to the second optical path. The first reflective portion and the second reflective portion have different surface curvatures. In an embodiment, the first reflective portion and the second reflective portion are a combination of a concave portion and a convex portion. For example, the first reflective portion is a concave portion, which extends in a direction close to the driving portion 136 in a concave manner relative to a surface of the transmitting portion 132; and the second reflective portion is a convex portion, which extends in a direction away from the driving portion 136 in a convex manner relative to the surface of the transmitting portion 132. It should be understood that the first reflective portion may also be a combination of a concave portion and a plane, a combination of a convex portion and a plane, or a combination of a concave portion and a concave portion with different curvatures, a combination of a convex portion and a convex portion with different curvatures, or a combination of a plane and a plane with different reflection directions. In an embodiment, the second reflective portion is configured to guide the first color laser light to the first optical path, and the first reflective portion is configured to guide the first color laser light to the second optical path.

In this embodiment, the undulating surface is provided with a first segment 135a and a second segment 135b, and the first reflective portion is provided in the first segment 135a, and the second reflective portion is provided in the second segment 135b. In an embodiment, adjacent first reflective portions, and/or an adjacent first reflective portion and second reflective portion, and/or adjacent second reflective portions are connected. In an embodiment, adjacent first reflective portions, and/or a first reflective portion and a second reflective portion, and/or second reflective portions are spaced apart from each other.

In an embodiment, the corresponding first reflective portion and second reflective portion of the undulating surface are staggered. In embodiments in which the first reflective portion and the second reflective portion are a combination of a concave portion and a convex portion, the undulating surface is corrugated. Further, the first reflective portion and the second reflective portion are arranged adjacently with a preset spacing therebetween.

The optical path selecting portion 134 is further configured to transmit the supplemental light. In this embodiment, the optical path selecting portion 134 is a curved dichroic sheet, which is configured to reflect blue light and transmit red light or reflect blue light and transmit yellow light.

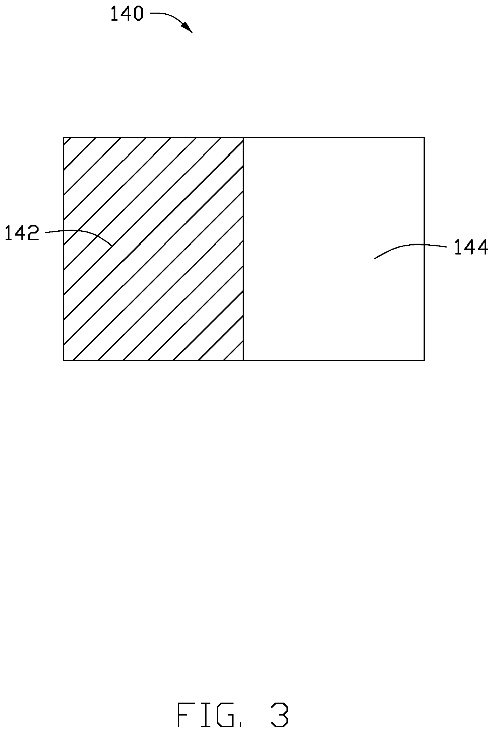

See FIG. 3 which is a top-view structural diagram of a first light splitting filter 140 shown in FIG 1. The light source system 100 further includes the first light splitting filter 140 arranged between the optical path selecting element 130, the first wavelength conversion device 150a, and the second wavelength conversion device 150b. The first light splitting filter 140 is configured to guide the second color fluorescent light exiting from the first wavelength conversion device 150a and the third color fluorescent light exiting from the second wavelength conversion device 150b to exit along a same optical path. A dichroic film is provided on a side, facing the second wavelength conversion device 150b, of the first light splitting filter 140. In this embodiment, the dichroic film is configured to reflect green light and transmit red light.

The first light splitting filter 140 is provided with a first region 142 and a second region 144, wherein the first region 142 is configured to guide the first color laser light transmitted along the first optical path to the first wavelength conversion device 150a, and the second region 144 is configured to guide the first color laser light transmitted along the second optical path to the second wavelength conversion device 150b. Further, the first region 142 corresponds to the first reflective portion and is configured to receive the light emitted by the first reflective portion; and the second region 144 corresponds to the second reflective portion and is configured to receive the light emitted by the second reflective portion. It should be understood that the first region 142 and the second region 144 may be arranged adjacently or spaced apart, and a spacing distance between the first region 142 and the second region 144 may be determined according to parameters of the first optical path and the second optical path, thereby ensuring that the first color laser light exiting from the first reflective portion and transmitted along the first optical path is guided to the first wavelength conversion device 150a by the first region 142, and that the first color laser light exiting from the second reflective portion and transmitted by the second optical path is guided to the second wavelength conversion device 150b by the second region 144.

The optical path selecting element 130 allows the first color laser light transmitted along the first optical path and the second optical path to exit alternately in a time sequence, such that the first light splitting filter 140 allows the first color laser light to exit alternately to the first wavelength conversion device 150a and the second wavelength conversion device 150b in a time sequence. In this embodiment, the first region 142 is configured to reflect the first color laser light, and the second region 144 is configured to transmit the first color laser light, and the first color laser light is blue laser light. On a side, facing the first wavelength conversion device 150a, of the first light splitting filter 140, the first region 142 may be provided with a dichroic film or a reflective film configured to reflect blue light, and the second region 144 may be provided with an anti-reflection film.

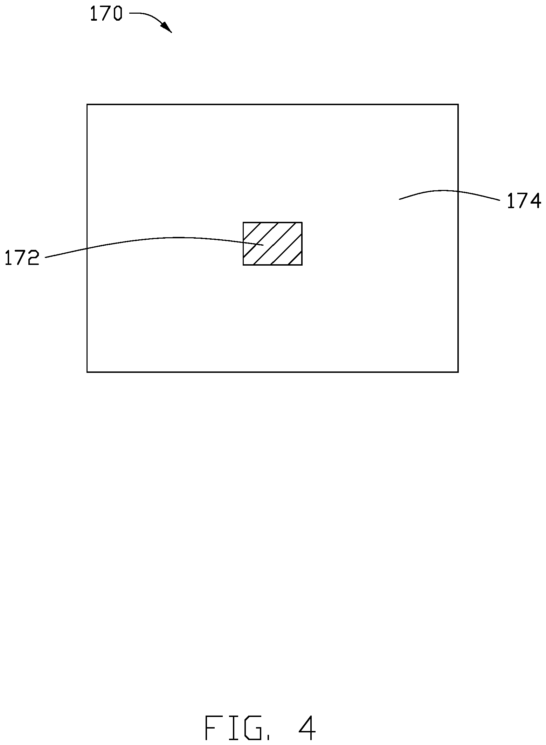

In conjunction with FIG 1, further refer to FIG 4 which is a top-view structural diagram of a second light splitting filter 170 shown in FIG 1. The light source system 100 further includes the second light splitting filter 170 arranged between the first light splitting filter 140 and the light homogenizing device 180, the second light splitting filter 170 is configured to guide the supplemental light, the second color fluorescent light and the third color fluorescent light exiting from the first light splitting filter 140, and the first color laser light transmitted by the optical path selecting element 130 to exit along a same optical path to the light homogenizing device 180.

The second color fluorescent light and third color fluorescent light after collimation are irradiated to a surface of the second light splitting filter 170, the second light splitting filter 170 including a coated region 172 and an edge region 174; the supplemental light and the first color laser light exiting from the optical path selecting element 130 converge near the coated region 172 through a converging lens 160; and the coated region 172 is configured to reflect the supplemental light and the first color laser light transmitted by the optical path selecting element 130, and the edge region 174 is configured to transmit the second color fluorescent light and the third color fluorescent light.

Specifically, the coated region 172 is coated with a reflective film or a filter film, or the coated region 172 is provided with a reflector or a filter, and the edge region 174 is coated with an anti-reflection film. In an embodiment, the coated region 172 is coated with a bandpass filter film configured to reflect light within a preset wavelength range, and a wavelength range of the first color laser light and a wavelength range of the supplemental light are within the preset wavelength range. The bandpass filter film reflects light within the preset wavelength range and reflects light outside the preset wavelength range. In an embodiment, the preset wavelength range is: 445 nm-455 nm, 515 nm-525 nm, and 633 nm-643 nm, and the above three wavelength bands are wavelength bands of the first color laser light and the supplemental light to reduce the loss of the fluorescent light in the coated region 172 and increase the utilization rate of fluorescent light.

In an embodiment, the first color laser light and the supplemental light are light in a first polarization state, and the coated region 172 is configured to reflect the light in the first polarization state and transmit light in other polarization states. As the fluorescent light is unpolarized light, the fluorescent light loses 1/2 of light efficiency in the coated region 172, which is beneficial to improving the utilization rate of the fluorescent light.

Further, both the supplemental light and the first color laser light exiting from the optical path selecting element 130 are laser light in a Gaussian distribution with a small etendue, and form a very small spot on the coated region 172 after convergence, a size of the coated region 172 matches that of the spot formed by the laser light. The fluorescent light in a Lambertian distribution has a large etendue, and an area of a spot irradiated to the surface of the second light splitting filter 170 is much larger than that of the spot formed by the laser light, and most of the fluorescent light is irradiated to the edge region 174. The light source system 100 can achieve the combination of the fluorescent light and the laser light with a small amount of the fluorescent light being lost, according to the principle of etendue-based light combination.

In the process of combining the laser light and the fluorescent light, by optimizing the focal length of the converging lens 160 and the scattering degree of the transmitting portion 132 in the optical path selecting element 130, the laser angle can be matched with the fluorescence angle, so that the combined light is continuous in angular distribution after the fluorescent light and the laser light are combined, which ensures the angular uniformity of the combined light, and avoids the degradation of the image quality of a projected picture or the quality of illumination light.

In addition, the light source system 100 in embodiments of the present disclosure further includes guide components known in the art, such as a relay lens and a reflector, which are not listed one by one here.

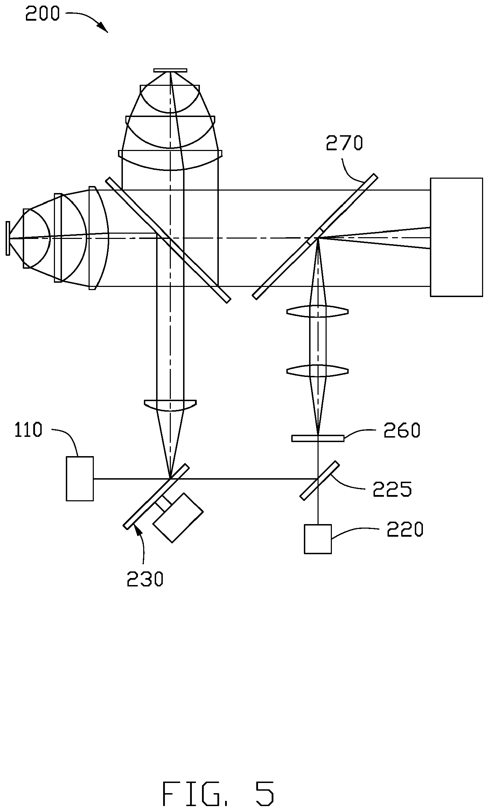

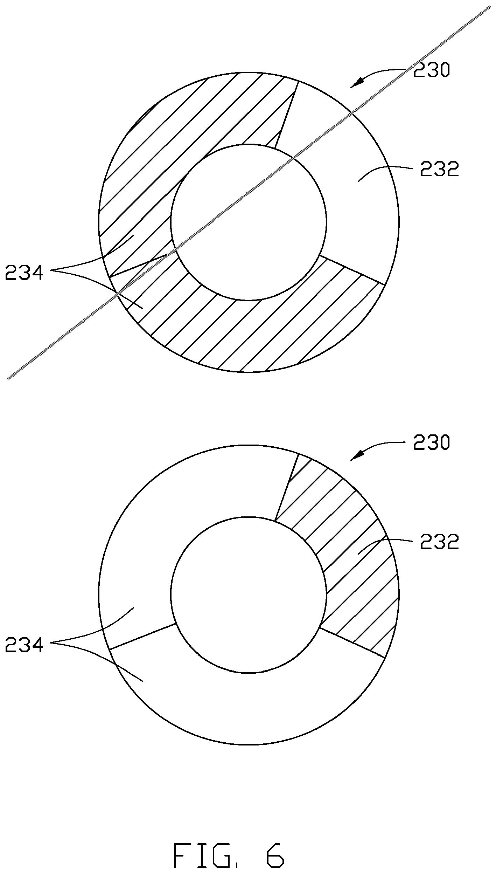

Referring to FIG 5 through FIG 6, the former is a structural diagram of a light source system 200 according to a second embodiment of the present disclosure, and FIG 6 is a top-view structural diagram of an optical path selecting element 230 shown in FIG 5. The light source system 200 differs from the light source system 100 mainly in that supplemental light does not pass through the optical path selecting element 230, which is beneficial to improving the utilization rate of laser light. Specifically, first color laser light transmitted by the optical path selecting element 230 and supplemental light emitted by a supplemental light source 220 are combined by a third light splitting filter 225 and then enter a second light splitting filter 270. Correspondingly, the optical path selecting element 230 has a transmitting region 232 configured to transmit the first color laser light, and an optical path selecting portion 234 configured to reflect the first color laser light. A scattering element 260 is further arranged between the second light splitting filter 270 and the third light splitting filter 225 to reduce the speckle phenomenon of the laser light and expand its etendue.

It is to be noted that, within the scope of the spirit or basic features of the present disclosure, the specific solutions applicable to the first embodiment may also be correspondingly applied to the second embodiment and will not be detailed here to save space and avoid repetition.

To those skilled in the art, obviously, the present disclosure is not limited to the details of the foregoing exemplary embodiments, and the present disclosure can be implemented in other specific forms without departing from the spirit or basic features of the present disclosure. Therefore, from any point of view, the embodiments should be regarded as exemplary and non-restrictive, and the scope of the present disclosure is defined by the appended claims rather than the above description, and thus, all changes that fall within the meanings and scopes of equivalent elements of the claims are intended to be encompassed within the present disclosure. No reference signs in the claims should be construed as limiting the claims involved. In addition, obviously the word "comprise/include" does not exclude other units or steps, and the singular does not exclude the plural. Multiple devices stated in the device claims may also be implemented by the same device or system through software or hardware. Words such as first and second are used to denote names, but do not denote any specific order.

Finally, it should be noted that the above embodiments are only used for illustrating the technical solutions of the present disclosure rather than for limitations.

## Claims

1. A light source system (100, 200), comprising:
an excitation light source (110) configured to emit first color laser light;
a supplemental light source (120, 220) configured to emit supplemental light of a different color from that of the first color laser light, the supplemental light being laser light;
an optical path selecting element (130, 230) comprising:
a transmitting portion (132, 232) configured to transmit the first color laser light;
an optical path selecting portion (134, 234) configured to reflect the first color laser light in time sequence to a first optical path or a second optical path; and
a driving portion (136) configured to drive the transmitting portion (132, 232) and the optical path selecting portion (134, 234) to be alternately located on an optical path of the first color laser light;
a first wavelength conversion device (150a) configured to generate a second color fluorescent light under excitation of the first color laser light transmitted along the first optical path; and
a second wavelength conversion device (150b) configured to generate a third color fluorescent light under excitation of the first color laser light transmitted along the second optical path;
**characterized in that** the light source system (100, 200) further comprises a control device, wherein when the transmitting portion (132, 232) is located on the optical path of the first color laser light, the control device controls the supplemental light source (120, 220) not to emit light; and when the optical path selecting portion (134, 234) is located on the optical path of the first color laser light, the control device controls the supplemental light source (120, 220) to emit light;
wherein the second color fluorescent light, the third color fluorescent light, the supplemental light, and the first color laser light transmitted by the optical path selecting element (130, 230) are combined and then exit.

2. The light source system (100, 200) of claim 1, wherein the optical path selecting portion (134, 234) comprises an undulating surface composed of surfaces of a first reflective portion and a second reflective portion, the first reflective portion is configured to guide the first color laser light to the first optical path, and the second reflective portion is configured to guide the first color laser light to the second optical path, especially the undulating surface is provided with a first segment (135a) and a second segment (135b), wherein the first reflective portion is arranged in the first segment (135a), and the second reflective portion is arranged in the second segment (135b).

3. The light source system (100, 200) of claim 2, wherein the first reflective portion and the second reflective portion are arranged to be staggered or adjacent to each other, especially the first reflective portion and the second reflective portion are planes or curved surfaces with different reflection paths.

4. The light source system (100, 200) of claim 1, wherein the light source system (100, 200) is provided with corresponding collection lens groups at positions adjacent to the first wavelength conversion device (150a) and the second wavelength conversion device (150b) respectively, each collection lens group is configured to converge light to the corresponding wavelength conversion device, and collimate the fluorescent light exiting from the corresponding wavelength conversion device and then allow the fluorescent collimated light to exit.

5. The light source system (100, 200) of claim 1, further comprising a light homogenizing device (180), wherein the second color fluorescent light, the third color fluorescent light, the supplemental light, and the first color laser light transmitted by the optical path selecting element (130, 230) are combined and then enter the light homogenizing device (180).

6. The light source system (100, 200) of any one of claims 1-5, wherein the light source system (100, 200) further comprises a first light splitting filter (140) configured to guide the second color fluorescent light exiting from the first wavelength conversion device (150a) and the third color fluorescent light exiting from the second wavelength conversion device (150b) to exit along a same optical path; and
the first light splitting filter (140) is provided with a first region (142) and a second region (144), wherein the first region (142) is configured to guide the first color laser light transmitted along the first optical path to the first wavelength conversion device (150a), and the second region (144) is configured to guide the first color laser light transmitted along the second optical path to the second wavelength conversion device (150b), especially the light source system (100, 200) further comprises a second light splitting filter (170, 270), wherein the second light splitting filter (170, 270) is configured to guide the supplemental light, the second color fluorescent light and the third color fluorescent light exiting from the first light splitting filter (140), and the first color laser light transmitted by the optical path selecting element (130, 230) to exit along a same optical path.

7. The light source system (100, 200) of claim 6, wherein the second color fluorescent light and the third color fluorescent light are irradiated to a surface of the second light splitting filter (170, 270) after collimation, the second light splitting filter (170, 270) comprises a coated region (172) and an edge region (174); the supplemental light and the first color laser light exiting from the optical path selecting element (130, 230) converge on the coated region (172); and the coated region (172) is configured to reflect the supplemental light and the first color laser light transmitted by the optical path selecting element (130, 230), and the edge region (174) is configured to transmit the second color fluorescent light and the third color fluorescent light.

8. The light source system (100, 200) of claim 7, wherein the coated region (172) is configured to reflect light within a preset wavelength range, and a wavelength range of the first color laser light and a wavelength range of the supplemental light are within the preset wavelength range, or
the first color laser light and the supplemental light are light in a first polarization state, and the coated region (172) is configured to reflect the light in the first polarization state and transmit light in other polarization states.

9. The light source system (100, 200) of claim 6, further comprising a third light splitting filter (125, 225), wherein the supplemental light emitted by the supplemental light source (120, 220) and the first color laser light emitted by the excitation light source (110) are combined by the third light splitting filter (125, 225) and then enter the optical path selecting element (130, 230), and the optical path selecting portion (134, 234) of the optical path selecting element (130, 230) is further configured to transmit the supplemental light especially the transmitting portion (132, 232) is a scattering sheet.

10. The light source system (100, 200) of claim 9, wherein the optical path selecting portion (134, 234) is a dichroic sheet with a curved surface.

11. The light source system (100, 200) of claim 6, further comprising a third light splitting filter (125, 225), wherein the first color laser light transmitted by the optical path selecting element (130, 230) and the supplemental light emitted by the supplemental light source (120, 220) are combined by the third light splitting filter (125, 225) and then enter the second light splitting filter (170, 270).

12. The light source system (100, 200) of claim 11, wherein a scattering element (260) is further provided between the second light splitting filter (170, 270) and the third light splitting filter (125, 225).

13. A projection device, comprising the light source system (100, 200) of any one of claims 1-12.

14. An illumination device, comprising the light source system (100, 200) of any one of claims 1-12.

## Patentansprüche

1. Ein Lichtquellensystem (100, 200), umfassend:
eine Anregungslichtquelle (110), die so konfiguriert ist, dass sie Laserlicht der ersten Farbe aussendet;
eine Zusatzlichtquelle (120, 220), die so konfiguriert ist, dass sie Zusatzlicht einer anderen Farbe als das Laserlicht der ersten Farbe aussendet, wobei das Zusatzlicht ein Laserlicht ist;
ein optisches Pfadauswahlelement (130, 230), umfassend:
einen Sendeabschnitt (132, 232), der zum Senden des ersten Farblaserlichts konfiguriert ist;
einen optischen Pfadauswahlabschnitt (134, 234), der dazu konfiguriert ist, das erste Farblaserlicht in zeitlicher Abfolge auf einen ersten optischen Pfad oder einen zweiten optischen Pfad zu reflektieren; und
einen Antriebsabschnitt (136), der so konfiguriert ist, dass er den Sendeabschnitt (132, 232) und den optischen Pfadauswahlabschnitt (134, 234) so antreibt, dass sie abwechselnd auf einem optischen Pfad des Laserlichts der ersten Farbe angeordnet sind;
eine erste Wellenlängenumwandlungsvorrichtung (150a), die dazu konfiguriert ist, unter Anregung des entlang des ersten optischen Pfads übertragenen Laserlichts der ersten Farbe ein Fluoreszenzlicht der zweiten Farbe zu erzeugen; und
eine zweite Wellenlängenumwandlungsvorrichtung (150b), die so konfiguriert ist, dass sie unter Anregung des entlang des zweiten optischen Pfads übertragenen Laserlichts erster Farbe ein Fluoreszenzlicht dritter Farbe erzeugt;
**dadurch gekennzeichnet, dass** das Lichtquellensystem (100, 200) ferner eine Steuervorrichtung umfasst, wobei die Steuervorrichtung die Zusatzlichtquelle (120, 220) steuert, kein Licht auszusenden, wenn sich der Sendeabschnitt (132, 232) auf dem optischen Pfad des ersten Farblaserlichts befindet; und die Steuervorrichtung die Zusatzlichtquelle (120, 220) steuert, Licht auszusenden, wenn sich der optische Pfadauswahlabschnitt (134, 234) auf dem optischen Pfad des ersten Farblaserlichts befindet;
wobei das Fluoreszenzlicht der zweiten Farbe, das Fluoreszenzlicht der dritten Farbe, das Zusatzlicht und das Laserlicht der ersten Farbe, die vom optischen Pfadauswahlelement (130, 230) übertragen werden, kombiniert werden und dann austreten.

2. Das Lichtquellensystem (100, 200) nach Anspruch 1, wobei der optische Pfadauswahlabschnitt (134, 234) eine gewellte Oberfläche umfasst, die aus Oberflächen eines ersten reflektierenden Abschnitts und eines zweiten reflektierenden Abschnitts zusammengesetzt ist, wobei der erste reflektierende Abschnitt dazu konfiguriert ist, das Laserlicht der ersten Farbe zum ersten optischen Pfad zu leiten, und der zweite reflektierende Abschnitt dazu konfiguriert ist, das Laserlicht der ersten Farbe zum zweiten optischen Pfad zu leiten, wobei insbesondere die gewellte Oberfläche mit einem ersten Segment (135a) und einem zweiten Segment (135b) versehen ist, wobei der erste reflektierende Abschnitt im ersten Segment (135a) angeordnet ist und der zweite reflektierende Abschnitt im zweiten Segment (135b) angeordnet ist.

3. Das Lichtquellensystem (100, 200) nach Anspruch 2, wobei der erste reflektierende Abschnitt und der zweite reflektierende Abschnitt versetzt oder nebeneinander angeordnet sind, insbesondere wobei der erste reflektierende Abschnitt und der zweite reflektierende Abschnitt ebene oder gekrümmte Flächen mit unterschiedlichen Reflexionspfaden sind.

4. Das Lichtquellensystem (100, 200) nach Anspruch 1, wobei das Lichtquellensystem (100, 200) mit entsprechenden Sammellinsengruppen an Positionen neben der ersten Wellenlängenumwandlungsvorrichtung (150a) bzw. der zweiten Wellenlängenumwandlungsvorrichtung (150b) versehen ist, wobei jede Sammellinsengruppe so konfiguriert ist, dass sie Licht zur entsprechenden Wellenlängenumwandlungsvorrichtung konvergiert und das aus der entsprechenden Wellenlängenumwandlungsvorrichtung austretende fluoreszierende Licht kollimiert und dann das kollimierte fluoreszierende Licht austreten lässt.

5. Das Lichtquellensystem (100, 200) nach Anspruch 1, das außerdem eine Lichthomogenisierungsvorrichtung (180) umfasst, wobei das Fluoreszenzlicht der zweiten Farbe, das Fluoreszenzlicht der dritten Farbe, das Zusatzlicht und das Laserlicht der ersten Farbe, die vom optischen Pfadauswahlelement (130, 230) übertragen werden, kombiniert werden und dann in die Lichthomogenisierungsvorrichtung (180) eintreten.

6. Das Lichtquellensystem (100, 200) nach einem der Ansprüche 1 bis 5, wobei das Lichtquellensystem (100, 200) ferner einen ersten Lichtteilungsfilter (140) umfasst, der so konfiguriert ist, dass er das aus der ersten Wellenlängenumwandlungsvorrichtung (150a) austretende Fluoreszenzlicht zweiter Farbe und das aus der zweiten Wellenlängenumwandlungsvorrichtung (150b) austretende Fluoreszenzlicht dritter Farbe so leitet, dass sie entlang desselben optischen Pfads austreten; und
der erste Lichtteilungsfilter (140) ist mit einem ersten Bereich (142) und einem zweiten Bereich (144) versehen, wobei der erste Bereich (142) so konfiguriert ist, dass er das entlang des ersten optischen Pfads übertragene Laserlicht der ersten Farbe zu der ersten Wellenlängenumwandlungsvorrichtung (150a) leitet, und der zweite Bereich (144) so konfiguriert ist, dass er das entlang des zweiten optischen Pfads übertragene Laserlicht der ersten Farbe zu der zweiten Wellenlängenumwandlungsvorrichtung (150b) leitet, ferner umfasst das Lichtquellensystem (100, 200) einen zweiten Lichtteilungsfilter (170, 270), wobei der zweite Lichtteilungsfilter (170, 270) so konfiguriert ist, dass er das Zusatzlicht, das Fluoreszenzlicht der zweiten Farbe und das Fluoreszenzlicht der dritten Farbe, die aus dem ersten Lichtteilungsfilter (140) austreten, und das Laserlicht der ersten Farbe, das von dem optischen Pfadauswahlelement (130, 230) übertragen wird, so leitet, dass es entlang eines gleichen optischen Pfads austritt.

7. Das Lichtquellensystem (100, 200) nach Anspruch 6, wobei das Fluoreszenzlicht der zweiten Farbe und das Fluoreszenzlicht der dritten Farbe nach der Kollimation auf eine Oberfläche des zweiten Lichtteilungsfilters (170, 270) gestrahlt werden, wobei der zweite Lichtteilungsfilter (170, 270) einen beschichteten Bereich (172) und einen Randbereich (174) umfasst; wobei das Zusatzlicht und das Laserlicht der ersten Farbe, die aus dem optischen Pfadauswahlelement (130, 230) austreten, auf dem beschichteten Bereich (172) zusammenlaufen; und wobei der beschichtete Bereich (172) so konfiguriert ist, dass er das Zusatzlicht und das Laserlicht der ersten Farbe reflektiert, die vom optischen Pfadauswahlelement (130, 230) übertragen werden, und wobei der Randbereich (174) so konfiguriert ist, dass er das Fluoreszenzlicht der zweiten Farbe und das Fluoreszenzlicht der dritten Farbe überträgt.

8. Das Lichtquellensystem (100, 200) nach Anspruch 7, wobei der beschichtete Bereich (172) so konfiguriert ist, dass er Licht innerhalb eines voreingestellten Wellenlängenbereichs reflektiert, und ein Wellenlängenbereich des Laserlichts der ersten Farbe und ein Wellenlängenbereich des Zusatzlichts innerhalb des voreingestellten Wellenlängenbereichs liegen, oder
das erste Farblaserlicht und das Zusatzlicht sind Licht in einem ersten Polarisationszustand, und der beschichtete Bereich (172) ist so konfiguriert, dass er das Licht im ersten Polarisationszustand reflektiert und Licht in anderen Polarisationszuständen durchlässt.

9. Das Lichtquellensystem (100, 200) nach Anspruch 6, das zusätzlich einen dritten Lichtteilungsfilter (125, 225) aufweist, wobei das von der Zusatzlichtquelle (120, 220) emittierte Zusatzlicht und das von der Anregungslichtquelle (110) emittierte Laserlicht erster Farbe durch den dritten Lichtteilungsfilter (125, 225) kombiniert werden und dann in das optische Pfadauswahlelement (130, 230) eintreten, und der optische Pfadauswahlabschnitt (134, 234) des optischen Pfadauswahlelements (130, 230) zusätzlich so konfiguriert ist, dass er das Zusatzlicht durchlässt, insbesondere ist der durchlassende Abschnitt (132, 232) eine Streufolie.

10. Das Lichtquellensystem (100, 200) nach Anspruch 9, wobei der optische Pfadauswahlabschnitt (134, 234) ein dichroitisches Blatt mit einer gekrümmten Oberfläche ist.

11. Das Lichtquellensystem (100, 200) nach Anspruch 6, das außerdem einen dritten Lichtteilungsfilter (125, 225) umfasst, wobei das vom optischen Pfadauswahlelement (130, 230) übertragene Laserlicht der ersten Farbe und das von der Zusatzlichtquelle (120, 220) emittierte Zusatzlicht vom dritten Lichtteilungsfilter (125, 225) kombiniert werden und dann in den zweiten Lichtteilungsfilter (170, 270) eintreten.

12. Lichtquellensystem (100, 200) nach Anspruch 11, wobei zwischen dem zweiten Lichtteilungsfilter (170, 270) und dem dritten Lichtteilungsfilter (125, 225) zusätzlich ein Streuelement (260) vorgesehen ist.

13. Eine Projektionsvorrichtung, die das Lichtquellensystem (100, 200) eines der Ansprüche 1-12 umfasst.

14. Beleuchtungsvorrichtung, umfassend das Lichtquellensystem (100, 200) nach einem der Ansprüche 1

## Revendications

1. Système de source lumineuse (100, 200) comprenant :
une source de lumière d'excitation (110) configurée pour émettre une première lumière laser de couleur ;
une source de lumière supplémentaire (120, 220) configurée pour émettre une lumière supplémentaire d'une couleur différente de la première lumière laser de couleur, la lumière supplémentaire étant une lumière laser ;
un élément de sélection de trajet optique (130, 230) comprenant :
une partie émettrice (132, 232) configurée pour transmettre la première lumière laser de couleur ;
une partie de sélection du trajet optique (134, 234) configurée pour réfléchir la première lumière laser de couleur en séquence temporelle vers un premier trajet optique ou un second trajet optique ; et
une partie motrice (136) configurée pour entraîner la partie émettrice (132, 232) et la partie de sélection du trajet optique (134, 234) pour être alternativement situés sur un trajet optique de la première lumière laser de couleur ;
un premier dispositif de conversion de longueur d'onde (150a) configuré pour générer une deuxième lumière fluorescente de couleur sous excitation de la première lumière laser de couleur transmise le long du premier trajet optique ; et
un deuxième dispositif de conversion de longueur d'onde (150b) configuré pour générer une troisième lumière fluorescente de couleur sous l'excitation de la première lumière laser de couleur transmise le long du deuxième trajet optique ;
**caractérisé par le fait que** le système de source lumineuse (100, 200) comprend en outre un dispositif de commande, dans lequel, lorsque la partie émettrice (132, 232) est située sur le trajet optique de la première lumière laser de couleur, le dispositif de commande commande à la source lumineuse supplémentaire (120, 220) de ne pas émettre de lumière ; et lorsque la partie de sélection du trajet optique (134, 234) est située sur le trajet optique de la première lumière laser de couleur, le dispositif de commande commande à la source lumineuse supplémentaire (120, 220) d'émettre de la lumière ;
dans lequel la deuxième lumière fluorescente de couleur, la troisième lumière fluorescente de couleur, la lumière supplémentaire et la première lumière laser de couleur transmises par l'élément de sélection du trajet optique (130, 230) sont combinées et sortent ensuite.

2. Le système de source lumineuse (100, 200) de la revendication 1, dans lequel la partie de sélection du trajet optique (134, 234) comprend une surface ondulée composée de surfaces d'une première partie réfléchissante et d'une seconde partie réfléchissante, la première partie réfléchissante étant configurée pour guider la première lumière laser de couleur vers le premier trajet optique, et la seconde partie réfléchissante étant configurée pour guider la deuxième lumière laser de couleur vers le second trajet optique. La partie réfléchissante est configurée pour guider la première lumière laser de couleur vers le second trajet optique, en particulier la surface ondulée est pourvue d'un premier segment (135a) et d'un second segment (135b), la première partie réfléchissante étant disposée dans le premier segment (135a), et la seconde partie réfléchissante étant disposée dans le second segment (135b).

3. Système de source de lumière (100, 200) selon la revendication 2, dans lequel la première partie réfléchissante et la seconde partie réfléchissante sont disposées de manière à être décalées ou adjacentes l'une à l'autre, en particulier la première partie réfléchissante et la seconde partie réfléchissante sont des plans ou des surfaces courbes avec des chemins de réflexion différents.

4. Système de source de lumière (100, 200) selon la revendication 1, dans lequel le système de source de lumière (100, 200) est pourvu de groupes de lentilles de collecte correspondants à des positions adjacentes au premier dispositif de conversion de longueur d'onde (150a) et au second dispositif de conversion de longueur d'onde (150b) respectivement, chaque groupe de lentilles de collecte étant configuré pour faire converger la lumière vers le dispositif de conversion de longueur d'onde correspondant, et collimater la lumière fluorescente sortant du dispositif de conversion de longueur d'onde correspondant, puis permettre à la lumière collimatée fluorescente de sortir.

5. Système de source de lumière (100, 200) selon la revendication 1, comprenant en outre un dispositif d'homogénéisation de lumière (180), dans lequel la deuxième lumière fluorescente de couleur, la troisième lumière fluorescente de couleur, la lumière supplémentaire et la première lumière laser de couleur transmises par l'élément de sélection de trajet optique (130, 230) sont combinées puis pénètrent dans le dispositif d'homogénéisation de lumière (180).

6. Système de source de lumière (100, 200) selon l'une quelconque des revendications 1 à 5, dans lequel le système de source de lumière (100, 200) comprend en outre un premier filtre de séparation de lumière (140) configuré pour guider la deuxième lumière fluorescente de couleur sortant du premier dispositif de conversion de longueur d'onde (150a) et la troisième lumière fluorescente de couleur sortant du deuxième dispositif de conversion de longueur d'onde (150b) pour sortir le long d'un même trajet optique ; et
le premier filtre de division de lumière (140) est pourvu d'une première région (142) et d'une seconde région (144), la première région (142) étant configurée pour guider la première lumière laser de couleur transmise le long du premier trajet optique vers le premier dispositif de conversion de longueur d'onde (150a), et la seconde région (144) étant configurée pour guider la première lumière laser de couleur transmise le long du second trajet optique vers le second dispositif de conversion de longueur d'onde (150b), en particulier le système de source de lumière (100, 200) comprend en outre un second filtre de division de lumière (170, 270), le second filtre de division de lumière (170, 270) étant configuré pour guider la lumière supplémentaire, la seconde lumière fluorescente de couleur et la troisième lumière fluorescente de couleur sortant du premier filtre de division de lumière (140), et la première lumière laser de couleur transmise par l'élément de sélection de trajet optique (130, 230) pour sortir le long d'un même trajet optique.

7. Système de source de lumière (100, 200) selon la revendication 6, dans lequel la deuxième lumière fluorescente de couleur et la troisième lumière fluorescente de couleur sont irradiées sur une surface du deuxième filtre de séparation de lumière (170, 270) après collimation, le deuxième filtre de séparation de lumière (170, 270) comprend une région revêtue (172) et une région de bord (174) ; la lumière supplémentaire et la première lumière laser de couleur sortant de l'élément de sélection de trajet optique (130, 230) convergent vers la région revêtue (172) ; et la région revêtue (172) est configurée pour réfléchir la lumière supplémentaire et la première lumière laser de couleur transmises par l'élément de sélection de trajet optique (130, 230), et la région de bord (174) est configurée pour transmettre la deuxième lumière fluorescente de couleur et la troisième lumière fluorescente de couleur.

8. Système de source de lumière (100, 200) selon la revendication 7, dans lequel la région revêtue (172) est configurée pour réfléchir la lumière dans une plage de longueurs d'onde prédéfinie, et une plage de longueurs d'onde de la première lumière laser de couleur et une plage de longueurs d'onde de la lumière supplémentaire sont dans la plage de longueurs d'onde prédéfinie, ou la première lumière laser de couleur et la lumière supplémentaire sont de la lumière dans un premier état de polarisation, et la région revêtue (172) est configurée pour réfléchir la lumière dans le premier état de polarisation et transmettre la lumière dans d'autres états de polarisation.

9. Système de source de lumière (100, 200) selon la revendication 6, comprenant en outre un troisième filtre de séparation de lumière (125, 225), dans lequel la lumière supplémentaire émise par la source de lumière supplémentaire (120, 220) et la première lumière laser de couleur émise par la source de lumière d'excitation (110) sont combinées par le troisième filtre de séparation de lumière (125, 225) puis entrent dans l'élément de sélection de trajet optique (130, 230), et la partie de sélection de chemin optique (134, 234) de l'élément de sélection de chemin optique (130, 230) est en outre configurée pour transmettre la lumière supplémentaire, en particulier la partie de transmission (132, 232) est une feuille de diffusion.

10. Système de source lumineuse (100, 200) selon la revendication 9, dans lequel la partie de sélection de chemin optique (134, 234) est une feuille dichroïque avec une surface incurvée.

11. Système de source de lumière (100, 200) selon la revendication 6, comprenant en outre un troisième filtre de division de lumière (125, 225), dans lequel la première lumière laser de couleur transmise par l'élément de sélection de trajet optique (130, 230) et la lumière supplémentaire émise par la source de lumière supplémentaire (120, 220) sont combinées par le troisième filtre de division de lumière (125, 225) puis entrent dans le deuxième filtre de division de lumière (170, 270).

12. Système de source de lumière (100, 200) selon la revendication 11, dans lequel un élément de diffusion (260) est en outre prévu entre le deuxième filtre de division de lumière (170, 270) et le troisième filtre de division de lumière (125, 225).

13. Dispositif de projection, comprenant le système de source lumineuse (100, 200) selon l'une quelconque des revendications 1 à 12.

14. Dispositif d'éclairage, comprenant le système de source lumineuse (100, 200) selon l'une quelconque des revendications 1 à 12.
